# EUROPEAN PATENT APPLICATION

(11) **EP 2 902 122 A1**
(43) Date of publication of application: **05.08.2015**
(21) Application number: 15152861.9
(22) Date of filing: 28.01.2015
(51) Int. Cl.: B08B 9/08

(54) **Device for washing containers for transporting live poultry**

(30) Priority: 30.01.2014 IT TO20140069
(71) Applicant: Zanotti, Massimo, 25064 Gussago (BS) (IT)
(72) Inventor: Zanotti, Massimo, 25064 Gussago (BS) (IT)
(74) Representative: Buzzi, Franco

(57) **Abstract**

The washing of drawer-like cages (A) for the transport of live poultry consists of introducing the drawer-like cages (A) into a rotatable drum (11) in angularly-spaced positions, driving the intermittent rotation of the rotatable drum (11) by angular steps corresponding to the angular spacing between these angularly-spaced positions in synchronism with the introduction of the drawer-like cages (A), and spraying the drawer-like cages (A) with a washing liquid during their angular motion within the rotatable drum (11).

## Description

### Field of the invention

The present invention relates in general to containers for transporting live poultry from breeding farms to slaughterhouses, and particularly concerns the cleaning of these containers prior to their return from the slaughterhouse to the breeding farms for successive loading.

### State of the prior art

Traditionally, for transferring poultry from breeding farms to slaughterhouses, transport units are used on-board trucks, including supporting frames within which superimposed stacks of drawer-like cages are inserted, in an extractable manner. Examples of such transport units are described and illustrated in documents EP-1330952B1 and WO-2011/010329, and the relative drawer-like cages are typically of the type described and illustrated in the document EP-0867113B1. They have a quadrangular shape with a bottom wall and side walls provided with ventilation openings, and an open top for introducing and extracting the poultry.

Normally, these drawer-like cages are continuously moved between the breeding farm and the slaughterhouse, and vice versa, and thus need to be frequently cleaned from organic waste produced by the animals, also and above all in view of the fact that, if a flock is infected with salmonella or campylobacter, the risk of cross-contamination with other breeding farms must be absolutely avoided.

Cleaning of the drawer-like cages must therefore be as effective and complete as possible.

The systems currently in use involve washing the drawer-like cages arranged in the same position only, typically horizontally with the open side facing upwards or upside-down with the open side facing downwards, or in a vertical position with a comb arrangement. These traditional systems are not able to ensure the required complete cleaning of all the walls of the drawer-like cages with their interstices, and in particular those corresponding to the ventilation openings on the side walls and on the bottom wall. Furthermore, these known systems involve the movement of the drawer-like cages through the washing station by means of chain-movement assemblies which, in addition to involving cleaning problems themselves, do not allow the drawer-like cages to be kept stably in the most suitable predetermined position for receiving the washing jets.

### Summary of the invention

The object of the present invention is to overcome the aforesaid drawbacks and to make a device available for washing the drawer-like cages for transporting live poultry, which is able of ensuring the most complete and effective cleaning in a uniform and safe manner.

According to the invention, this object is achieved thanks to a washing device whose unique characteristics are defined in the characterizing part of claim 1, or rather comprising a rotatable drum with a horizontal axis having an inlet and an outlet, between which supports extend generally parallel to the axis of the drum, angularly spaced-apart from each other and configured to be temporarily engaged by the drawer-like cages, driving means for intermittently rotating the rotatable drum by angular steps corresponding to the angular spacing between said supports, means for introducing and extracting said drawer-like cages relative to the rotatable drum, in synchronism with its intermittent rotation, and spraying means of the drawer-like cages with a washing liquid during their angular motion between the inlet and the outlet of the rotatable drum.

Thanks to this solution idea, the drawer-like cages, conveniently sprayed in a plurality of different angular positions over a minimum of 360°, are washed completely and therefore entirely safe against the risk of contamination. The device according to the invention, in addition to being constructively simple and therefore relatively cheap, allows the stable and accurate positioning and maintenance of the drawer-like cages in the most suitable positions for obtaining complete and effective washing.

The invention provides several alternative embodiments, in the first of which, the drum has a length essentially equal to a multiple of the length of a drawer-like cage and is configured to receive therein a row of consecutive drawer-like cages linearly displaceable along longitudinal guides, alternately to their angular motion, from the inlet to the outlet of the drum. In this case, the drum comprises two pairs of longitudinal guides, angularly offset from each other by 90° and slidably engageable by the drawer-like cages.

In a second embodiment, the drum has a length essentially equal to the length of a drawer-like cage and is configured to receive a group of drawer-like cages kept linearly stationary during the angular motion thereof, between the inlet and the outlet of the drum. In this case, the drum conveniently comprises four pairs of longitudinal guides angularly offset from each other by 90°.

In the first and second embodiments, the drawer-like cages are introduced within the inlet of the drum by pushing, typically in a horizontal position, with the open side facing upwards or downwards, or in a vertical position.

A third embodiment essentially differs from the second by the fact that the drawer-like cages are introduced at the inlet of the drum with an oblique orientation, for example inclined by 45° in the case where the drum is configured to simultaneously accommodate four drawer-like cages. In this case, the two drawer-like cages, in turn arranged at the lower area of the drum, also receive, in addition to the washing water, the drainage water of the two cages arranged at the upper area of the drum.

The invention also relates to a method for washing the drawer-like cages for transporting live poultry.

### Brief description of the drawings

The invention will now be described in detail with reference to the attached drawings, provided purely by way of non-limiting example, in which:
Figure 1 is a schematic and simplified perspective view of a washing device according to a first embodiment of the invention, represented in a first operation step,
Figures 2-7 are analogous views to Figure 1, which exemplify the operation of the washing device of the first embodiment in different successive steps,
Figure 8 is a schematic and simplified perspective view of a second embodiment of the washing device of the invention, represented in a first operation step,
Figures 9-13 are analogous views to Figure 8, which exemplify the operation of the washing device of the second embodiment in different successive steps,
Figure 14 is a schematic perspective view of a third embodiment of the washing device according to the invention,
Figure 15 is an analogous view to Figure 14, in which some parts are omitted to highlight the operating components of the washing device,
Figure 16 is a perspective view on a larger scale of the operating components of the washing device of Figures 14 and 15,
Figure 17 shows a perspective view on an even greater scale of some of the components of Figure 16,
Figure 18 is an analogous view to Figure 14, which exemplifies the operation of the washing device according to the third embodiment of the invention, and
Figure 19 is a schematic perspective view illustrating a possible configuration of a slaughter line of chickens, which uses the washing device according to Figures 14-18.

### Detailed description of the invention

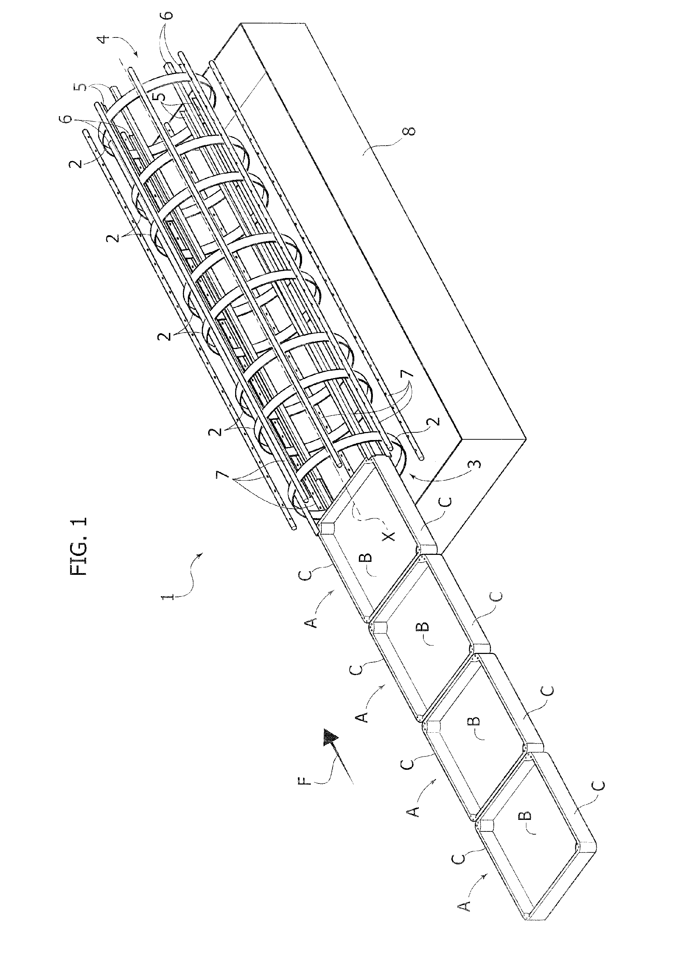

Referring initially to Figure 1, the washing device according to the invention, as shown schematically in simplified form, is configured to operate with drawer-like cages for transporting live poultry indicated by A, for example, of the type described and illustrated in the document cited above, EP-0867113B1. Each drawer-like cage A consists of a body of molded plastic material of a quadrangular shape, more precisely rectangular, open at the top and having a bottom wall B, and two pairs of opposite side walls, the longer of which are indicated by C. Both the bottom wall and the side walls are normally formed with ventilation openings, not represented for simplicity of illustration.

The washing device of the drawer-like cages A essentially comprises a hollow drum 1 generally cylindrical, elongated and with a horizontal axis indicated by X that, in the schematic illustrated, is formed of a series of spaced-apart circular rings 2, arranged between an inlet end 3 and an outlet end 4 of the drum 1. These rings 2 may in fact be composed of annular portions of a protective tunnel at least partially closed, also not shown for simplicity of illustration.

The rings 2 sustain pairs of horizontal guides 5, 6 which extend longitudinally between the inlet end 3 and the outlet end 4 of the drum 1 and are angularly spaced-apart from each other. In the case of the illustrated example, the two guides 5 are offset angularly with respect to the two guides 6 by 90°, or rather, they are arranged in a crossed configuration. It should be noted, however, that additional pairs of these guides could also be provided.

The guides 5, 6 are arranged to be temporarily engaged in a slidable manner by the opposite side walls C of the drawer-like cages A, according to what will be further explained below.

The hollow drum 1 is rotatable around its horizontal axis X and is driven in rotation in a discontinuous manner, or rather, intermittently by angular steps corresponding to the angular spacing between the pairs of guides 5, 6, or rather, in the case of the illustrated example, by steps of 90°. The system for driving the rotation is not illustrated in detail and can be of any motorized type within the scope of those skilled in the art.

In the case of the first embodiment described herein, the length of the drum 1 from the inlet 3 to the outlet 4 is a multiple of the length of each drawer-like cage A, and more precisely is essentially equal to four times this length. In this way, the drum 1 is able to simultaneously accommodate therein a row of four drawer-like cages A, arranged one after the other and linearly displaceable, or rather, they move along the longitudinal guides 5, 6 between the inlet 3 and the outlet of the drum 1 alternately to the angular motion thereof. The length of the drum 1 can, however, vary according to the drawer-like cages intended for simultaneous washing, as well as the required orientation of the drawer-like cage A in turn transferred to the outlet 4.

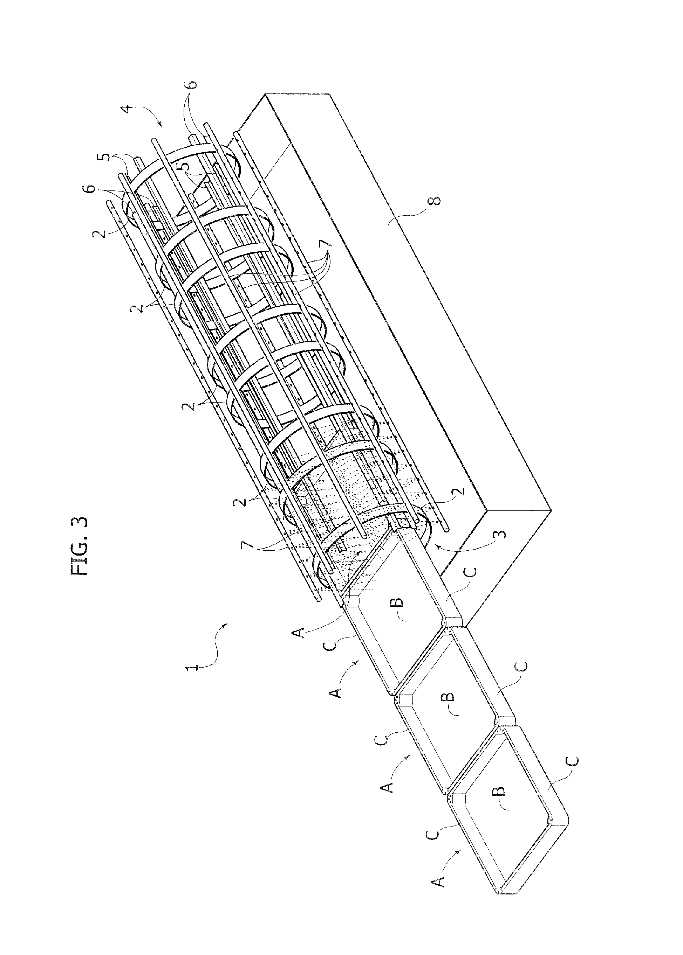

Numeral 7 indicates stationary or rotary tubes extending longitudinally outside the drum 1, which are connected to a feed circuit of a washing liquid under pressure, not shown. These tubes 7 are equipped with spray nozzles facing the inside of the drum 1 for spraying the washing liquid, as exemplified, for simplicity of illustration, only in Figure 3. It should be noted that it is also possible to provide similar stationary or rotary tubes with spray nozzles extending within the drum 1.

Below the drum 1, a storage tank 8 is arranged for collecting the washing liquid and impurities from the drawer-like cages A during operation of the washing device. This tank 8 is conveniently provided with a grid filter and decantation sectors (not shown) to facilitate separation of the solid residues from the washing liquid, which can be continuously recirculated, in this way, to the tubes 7.

The washing liquid may simply consist of water or of a mixture of water and sodium hydroxide, conveniently heated to about 90°C.

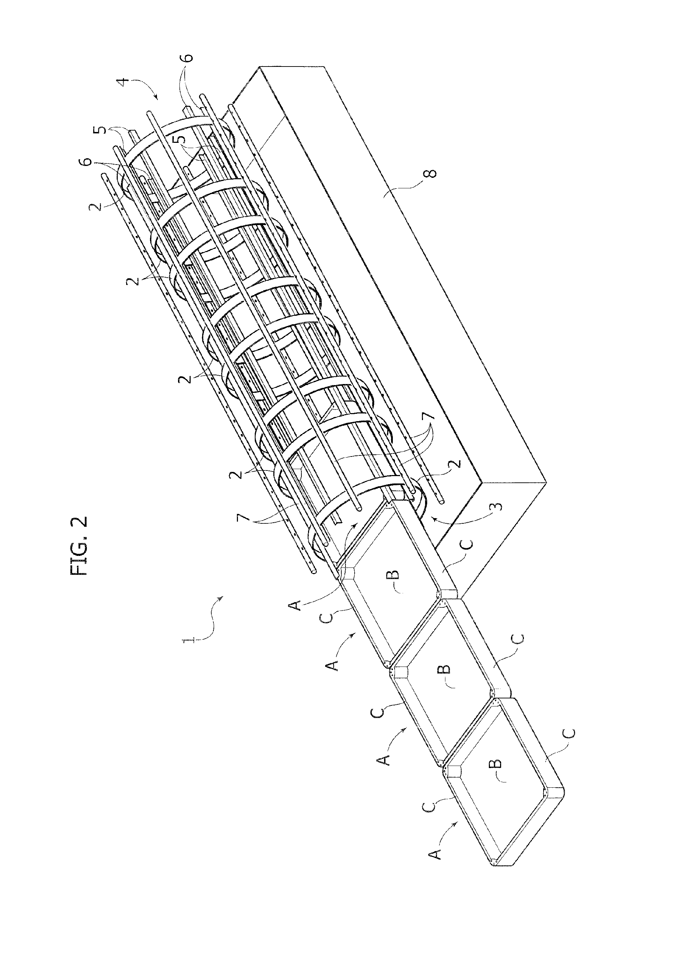

Referring now to Figures 2 to 7, the operation of the washing device according to the invention is as follows:

The drawer-like cages A, aligned one after the other according to a horizontal row with their open upper side normally facing upwards, are fed to the inlet 3 of the drum 1 in the direction indicated by the arrow F, intermittently in synchronism with the rotation at angular steps thereof. Advantageously, the feeding is carried out by simple pushing, via a motorized pusher not visible in the drawings, but within the scope of those skilled in the art, acting on the end of the row of the drawer-like cages A opposite to the drum 1.

The operating cycle involves advancing the row of drawer-like cages A in order to insert the side walls C of the first drawer-like cage A, i.e. the one placed in front of the inlet end 3 of the drum 1, along the longitudinal guides of the pair positioned angularly to receive them, in this case the two guides 5.

The row of drawer-like cages A is then pushed forward while the drum 1 remains stationary, until the first drawer-like cage A is introduced completely within the drum 1, as shown in Figure 2, for sliding along the guides 5.

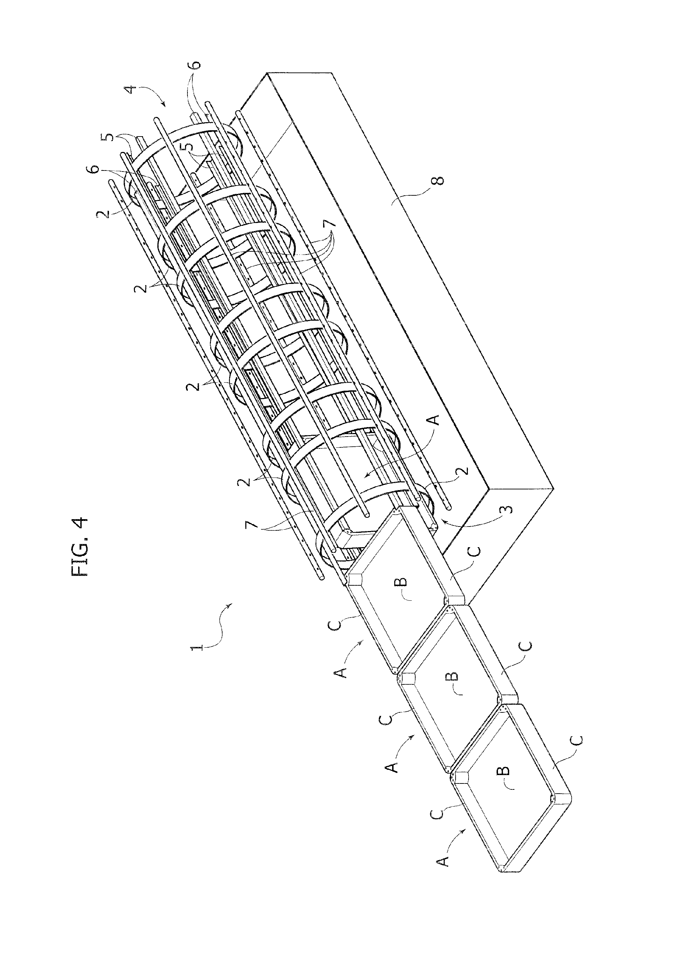

At the end of this step, advancing of the row of drawer-like cages A is stopped and the first drawer-like cage A thus introduced into the drum 1 starts to be sprayed with the washing liquid (Figure 3). At the same time, the drum 1 is rotated by 90° in order to position the first drawer-like cage A vertically and to align the other pairs of guides 6 with the second drawer-like cage C waiting at the inlet end 3 of the drum 1, as shown in Figure 4.

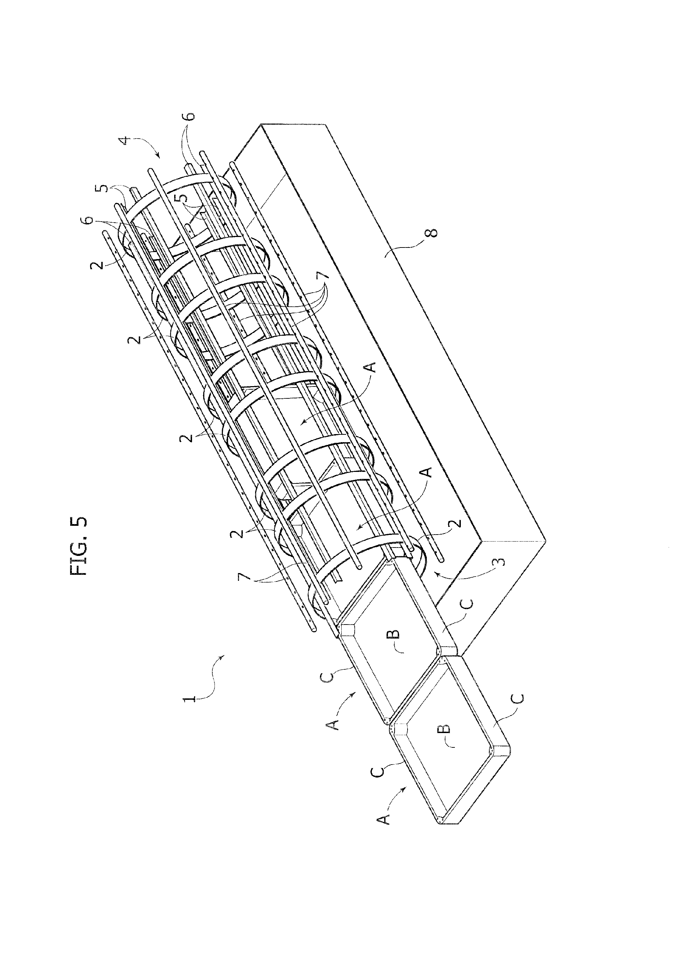

At the end of the rotation, the push-advancing of the row of drawer-like cages A is again driven, until the complete insertion of the second drawer-like cage A on the guides 6, as shown in Figure 5.

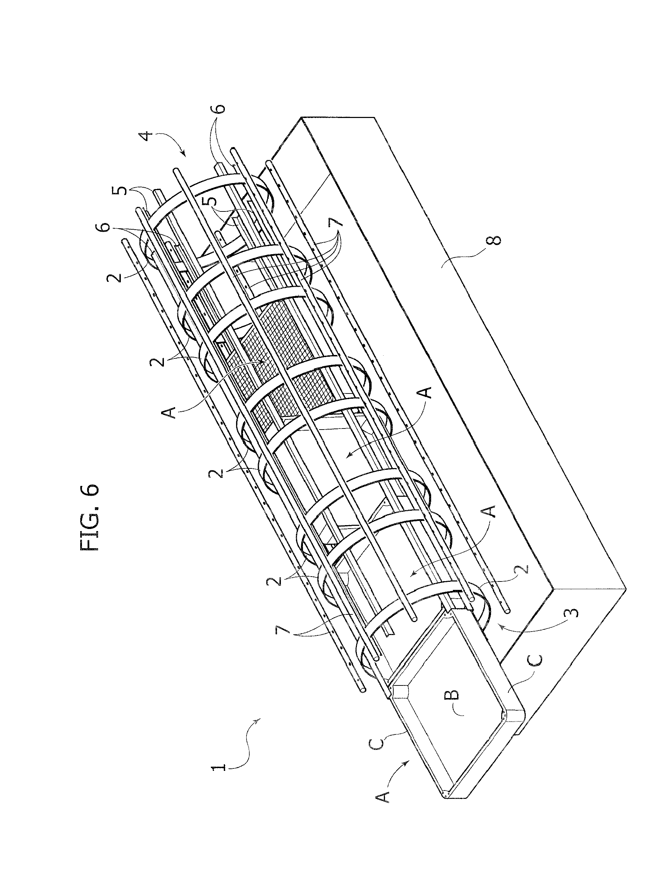

The drum 1 is then rotated again by 90° so as to be able to receive the third drawer-like cage A along the guides 5, as shown in Figure 6, and this procedure continues in an analogous way for subsequent drawer-like cages A.

During operation, each drawer-like cage A advances along the drum 1 from the inlet 3 to the outlet 4, undergoing at least one full rotation of 360° while it is sprayed continuously by the washing liquid supplied by the tube 7.

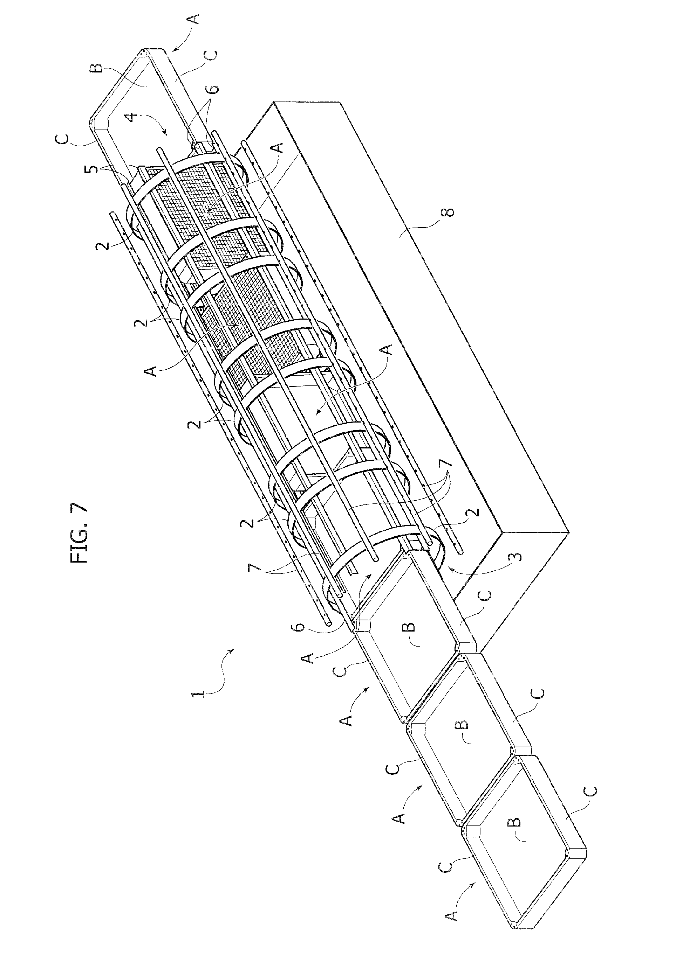

In the case of the illustrated example, and as seen in Figure 7, the arrangement is such that at the end of the washing through the drum 1, each drawer-like cage A leaves from the outlet end 4 in the same position in which it entered at the inlet end 3, or rather, in a horizontal position with the open upper side facing upwards.

In summary, the sequence of the cycle is thus as follows:
1. The first drawer-like cage A is pushed into the drum 1 in a horizontal position with the open side facing upwards.
2. First rotation of the drum 1 by 90°, whereby the first cage A is arranged vertically on one side.
3. The second cage A is pushed into the drum 1 and in turn pushes the first cage A forward while this is in a vertical position.
4. The drum 1 carries out a second rotation of 90°, so that:
   a. The first cage A is arranged in an overturned horizontal position.
   b. The second cage A is arranged in a vertical position on one side.
   c. The third cage A is pushed into the drum 1 and pushes the first two cages forward.
5. The drum 1 carries out a third rotation of 90°.
   a. The first cage A is arranged in a vertical position on the other side.
   b. The second cage A is arranged in an overturned horizontal position.
   c. The third cage A is arranged in a vertical position on one side.
6. The fourth cage A enters the drum 1 and pushes the previous three cages forwards.
7. The drum 1 carries out a fourth rotation of 90°.
   a. The first cage A is once again arranged in the horizontal entry position.
   b. The second cage A is arranged in a vertical position on the other side.
   c. The third cage A is arranged in an overturned horizontal position.
   d. The fourth cage A is arranged in a vertical position on one side.
8. The fifth cage A begins a new cycle while the first cage A leaves the drum 1 in the same position as it entered.

Obviously, if the drawer-like cages A leaving the drum 1 are required to be positioned in a different way from the entry position, it is sufficient to increase or decrease the number of rotations imparted to the drum 1, or the number of pairs of longitudinal guides, or even, as already said, change the length of the drum 1.

The positioning of the incoming drawer-like cages A at the inlet end 3 of the drum 1 can be different from that illustrated, for example upside down, i.e. with the open side facing down, or it may be vertical.

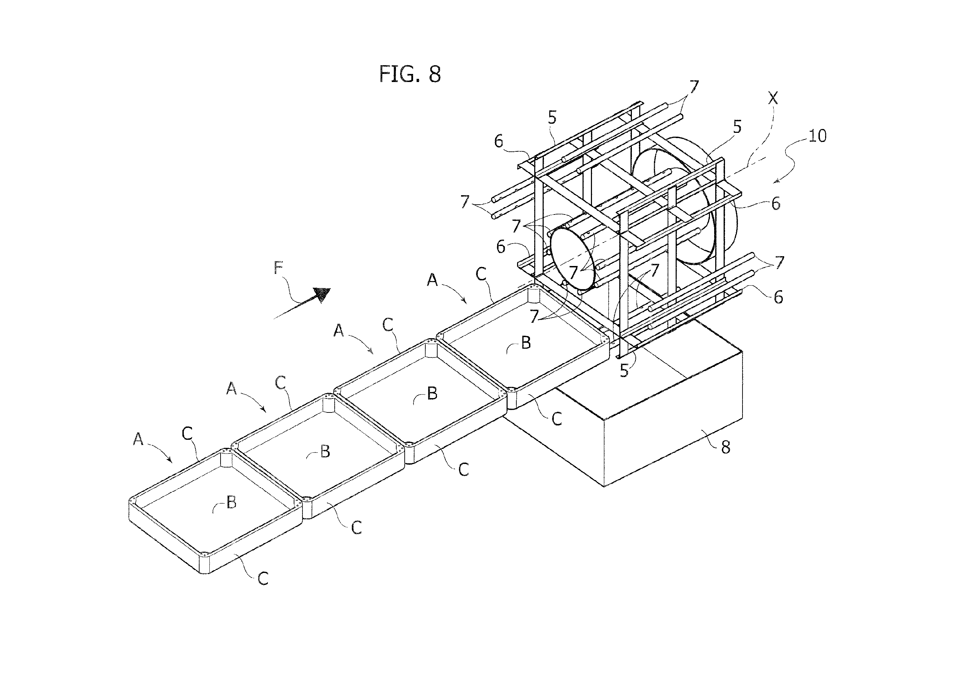

The variant of the washing device illustrated in Figures 8 to 13, in which identical or similar parts to those already previously described are indicated by the same reference numerals, differs structurally from the first embodiment in that it has a different and more compact conformation of the rotatable drum, indicated by 10.

The drum 10 in fact has a length essentially equal to the length of a single drawer-like cage A and is configured to receive a group of drawer-like cages in which, instead of moving along the X axis as in the case of the first embodiment described above, they remain linearly stationary, i.e. they do not move between the inlet 3 and the outlet 4 of the drum 10 during the angular displacements thereof. Furthermore, the drum 10 has, in this case, a generally quadrangular shape and is provided with four pairs of longitudinal guides 5, 6 angularly offset from each other by 90°. It should be noted that the number of these longitudinal guides could also be greater or less than four.

In this case, the tubes 7 for spraying the washing liquid are conveniently arranged both outside and inside the drum 10.

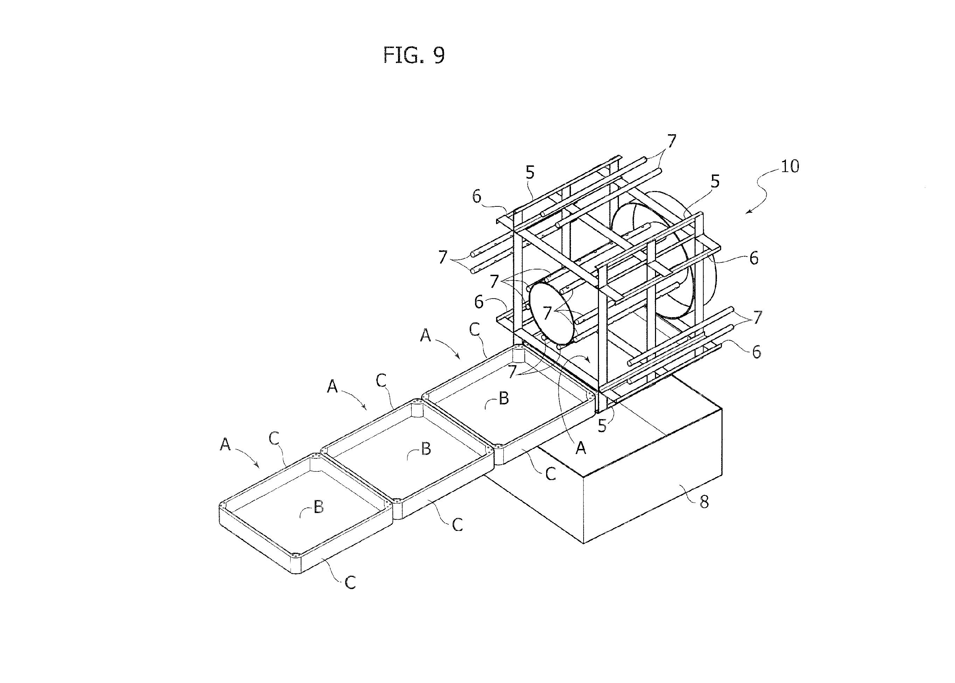

Referring now to Figures 9 to 13, the operation of the washing device according to this embodiment is as follows.

The drawer-like cages A, aligned one after the other according to a horizontal row with their open upper side normally facing upwards, are also in this case, fed in the direction of arrow F to the inlet 3 of the drum 10, intermittently in synchronism with the rotation at angular steps thereof, simply by pushing, by means of a motorized pusher acting on the end of the row of the drawer-like cages A opposite to the drum 10.

The operating cycle involves advancing the row of drawer-like cages A in order to insert the side walls C of the first drawer-like cage A, i.e. the one placed in front of the inlet end 3 of the drum 10, along the longitudinal guides of the pair positioned angularly to receive them, in this case the two guides 5 arranged horizontally below. It should be noted that, alternatively, the drawer-like cages A could also be inserted into the inlet 3 of the drum 10 at the guides 5 or 6 positioned horizontally above.

The row of drawer-like cages A is then pushed forward while the drum 10 remains stationary, until the first drawer-like cage is fully introduced within the drum 10, as shown in Figure 9, by sliding along the guides 5.

At the end of this step, advancing of the row of drawer-like cages A is stopped and the first drawer-like cage A thus introduced into the drum 10 starts to be sprayed with the washing liquid (Figure 3). At the same time, the drum 10 is rotated by 90° around its axis X in order to position the first drawer-like cage A vertically and align the other pair of guides 6 with the second drawer-like cage A waiting at the inlet end 3 of the drum 1.

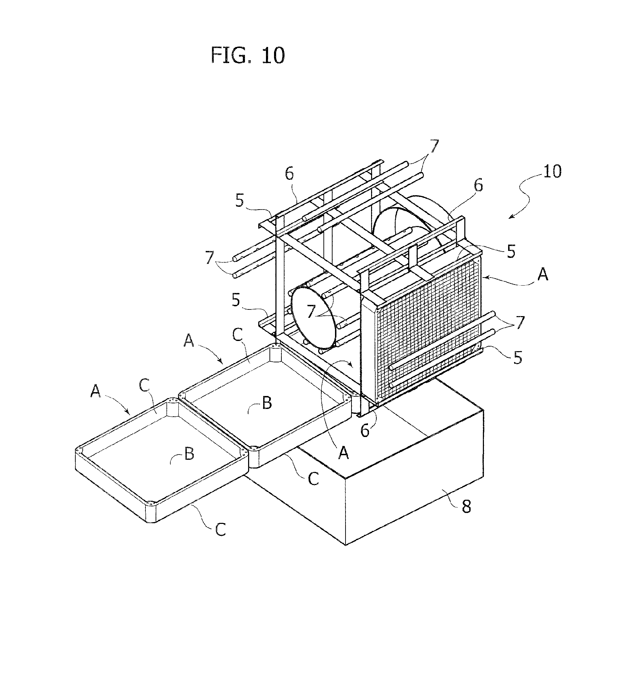

At the end of the rotation, the push-advancing of the row of drawer-like cages A is again driven, until the complete insertion of the second drawer-like cage A on the guides 6, as shown in Figure 10.

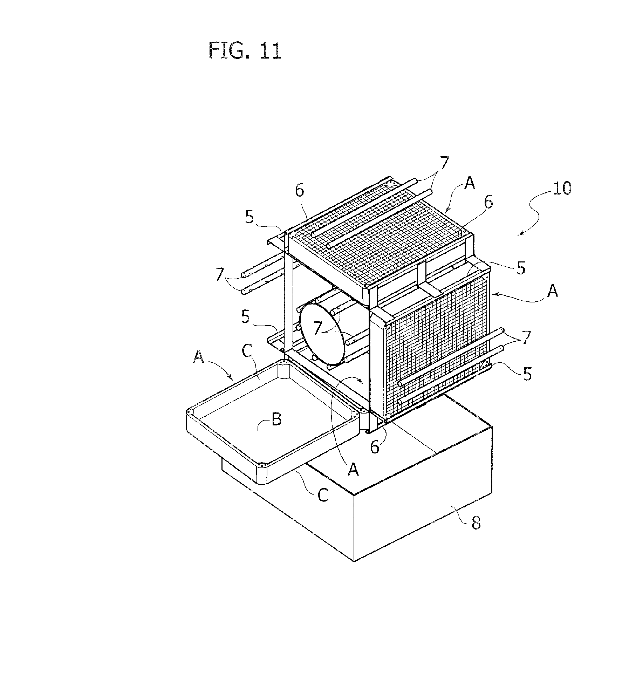

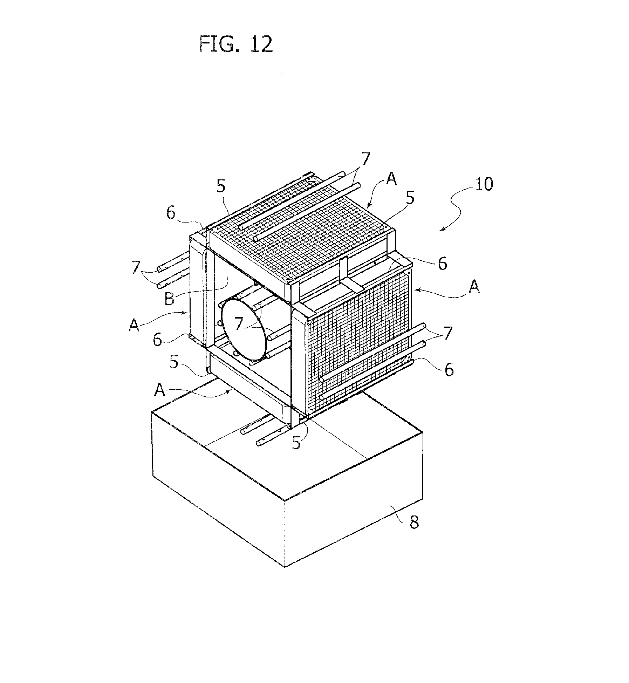

The drum 10 is again rotated by 90° so as to be able to receive the third drawer-like cage A along the guides 5, as shown in Figure 11, and this procedure continues in an analogous way for the fourth drawer-like cage A, which is inserted along the guides 6 as shown in Figure 12.

During operation, each drawer-like cage A rotates by 360° while remaining linearly stationary from the inlet 3 to the outlet 4 of the drum 10, and at the end of the outlet 4 is pushed out due to the insertion of a new drawer-like cage A within the inlet 3. Unlike the first embodiment described above, in this variant, the intermittent linear advancing motion of the row of drawer-like cages A only concerns two at a time: that which is incoming and that which is outgoing relative to the drum 10.

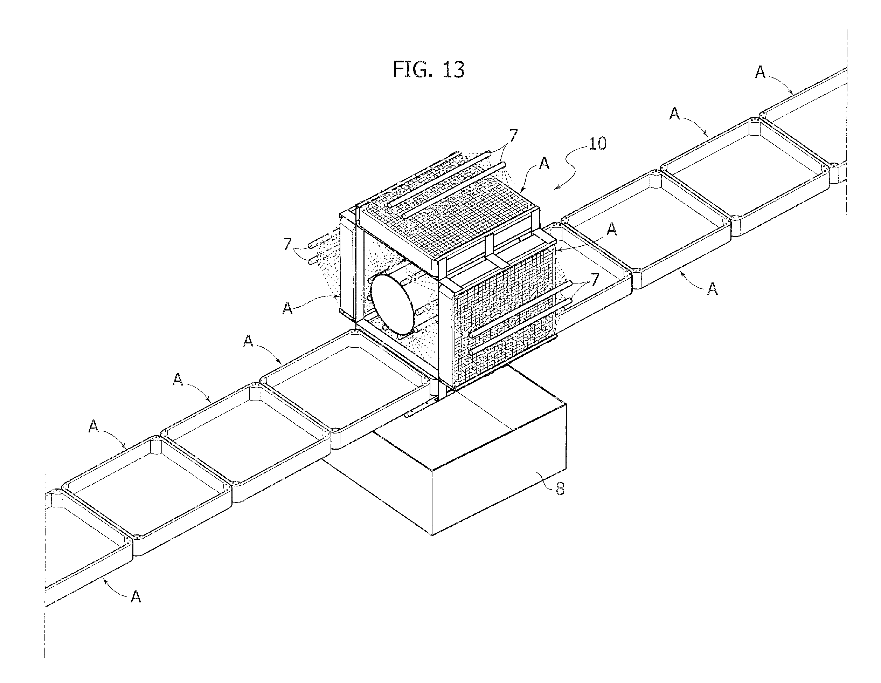

During the 360° rotation, each drawer-like cage A is continuously washed from the outside and from the inside with the washing liquid, in the manner shown schematically in Figure 13. The washing liquid sprayed on the two drawer-like cages A, in turn positioned vertically, and on that positioned horizontally above, pours onto the drawer-like cage, in turn positioned horizontally below, and is then used in a twofold manner before being collected in the tank 8 and reintroduced into the hydraulic circuit after filtration and decantation.

In this case as well, the arrangement is such that at the end of the washing, each drawer-like cage A conveniently leaves from the outlet end 4 of the drum 10 in the same position in which it entered at the inlet end 3, or rather in a horizontal position with the open upper side facing upwards.

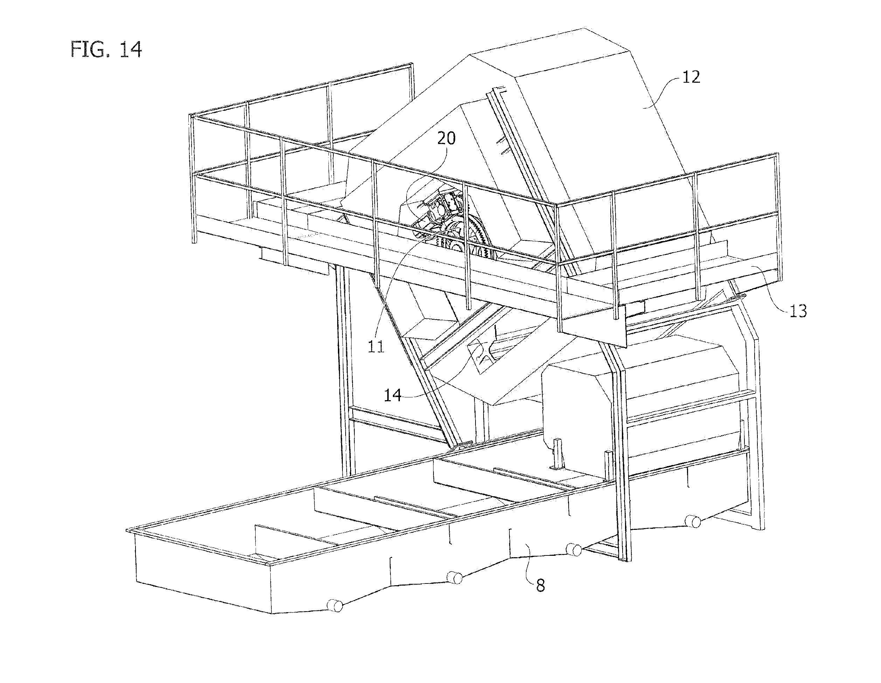

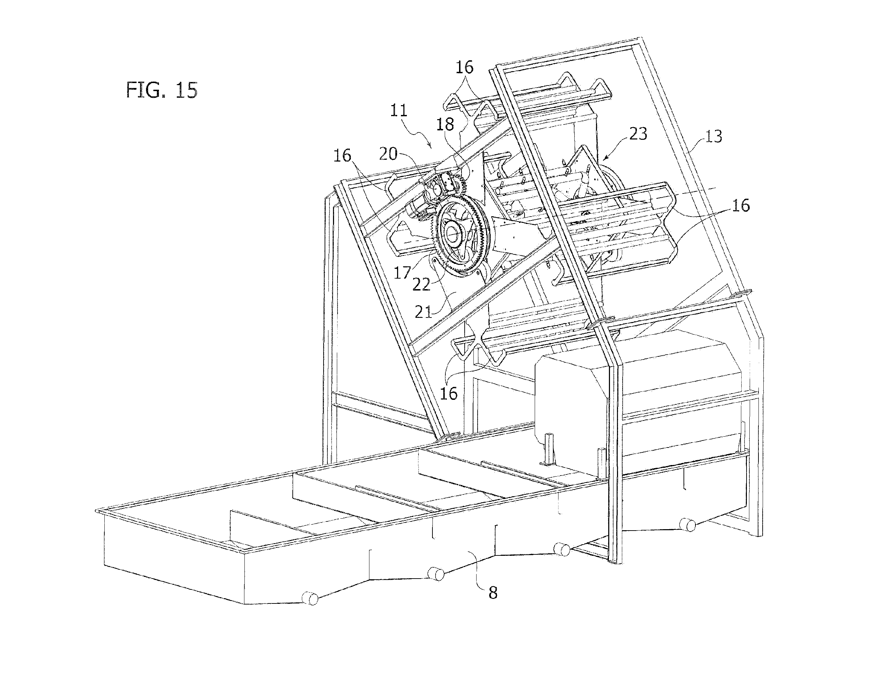

The third embodiment illustrated in Figures 14 to 18 differs from the second embodiment, described above, essentially by the fact that the drawer-like cages A are. in turn introduced in the rotatable drum, indicated by 11, in an oblique configuration. In the case in which, as shown, the drum 11 is configured to simultaneously accommodate four drawer-like cages A, the angle of inclination of the entering drawer-like cages A is equal to 45°. Of course, this angle may be different in the case in which the drum 11 is designed to accommodate a different number of drawer-like cages A, for example three or five.

In this way, in the case of the illustrated example, the two drawer-like cages A, in turn arranged in the lower area of the drum 11 also receive, in addition to the wash water, the drainage water of the two cages arranged in the upper area of the drum 11.

In detail, the rotatable drum 11 is contained within a stationary protective casing 12, carried by a supporting frame 13 above the collection tank 8 of the washing liquid and the impurities from the drawer-like cages A. The casing 12 has, at the bottom, an inlet opening 14 on one side and an outlet opening on the opposite side not visible in the drawings.

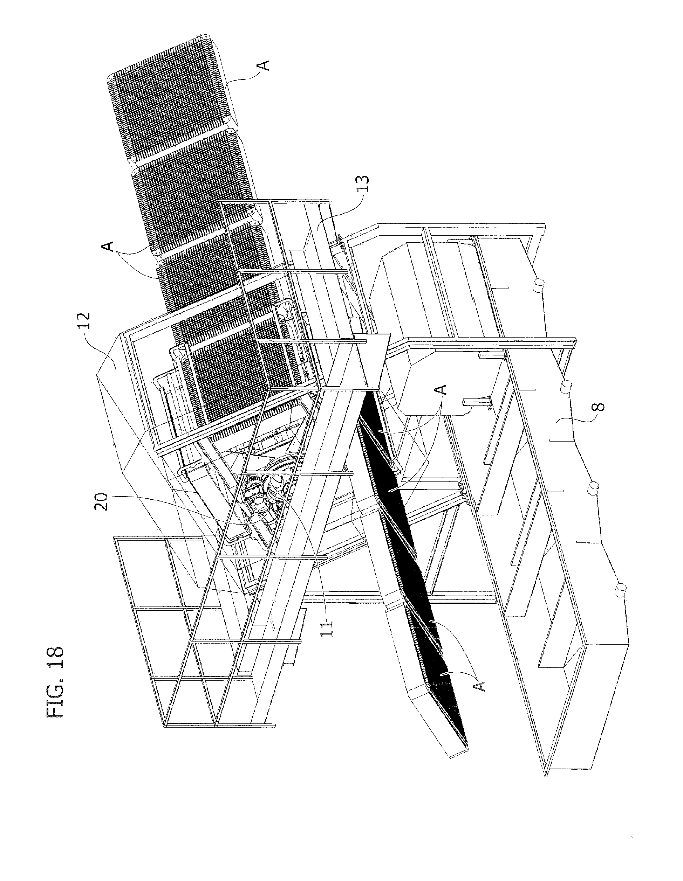

The rotatable drum 11 comprises four angularly equidistant radial arms 15 at each end, and the radial arms 15, corresponding to the two ends, are interconnected axially by double supports 16, within which the opposite sides C of the drawer-like cages A temporarily engage, introduced, in turn, at the inlet 14 into the rotatable drum 11, preferably at the bottom thereof. The introducing modes, as well as the unloading modes at the outlet of the drum 11, can be analogous to those already described with reference to the previous embodiments, i.e. with the aid of a pusher, not shown, or with any motorized system within the scope of those skilled in the art. The supporting frame 13 is therefore shaped in a suitable manner, and to this effect it is equipped with special column guides of the drawer-like cages A upstream and downstream of the drum 11, in the manner illustrated schematically in Figure 18, which will be discussed below.

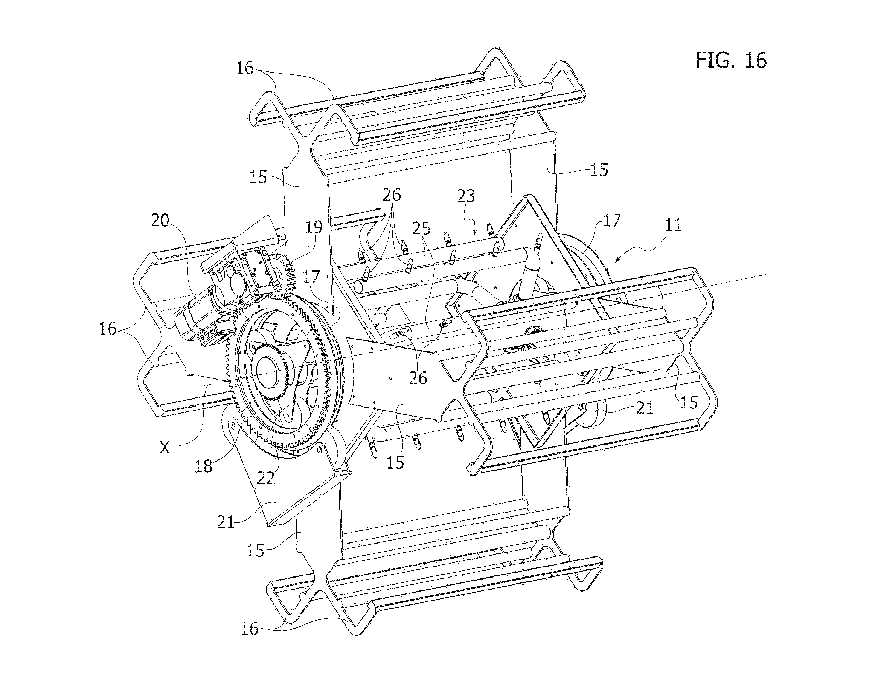

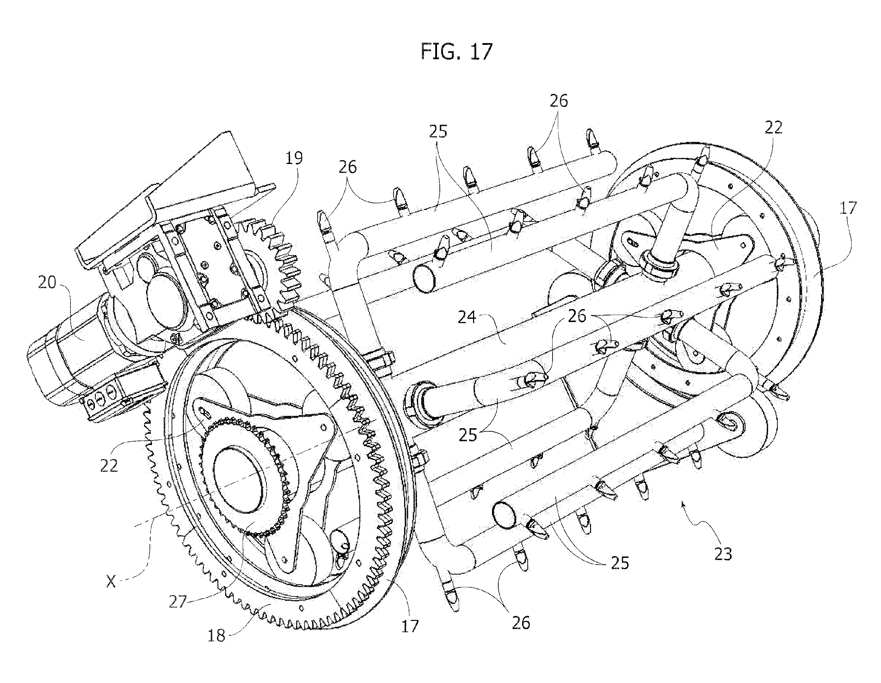

As is illustrated in greater detail in Figures 16 and 17, the drum 11 carries two rings 17 at its ends, one of which has a ring gear 18 meshing with a pinion gear 19 driven in rotation by an electric motor 20. The rings 17 are rotatably supported externally by respective rolling bearings 21 and, in turn, they internally support, in rotation, two roller assemblies 22 carried by a spraying assembly 23, arranged in a radially inner position relative to the supports 16. The spraying assembly 23 is formed by a central manifold 24 connected to a plurality of tubes 25 extending axially within the drum 11 and provided with sprinkling nozzles 26. One of the two roller assemblies 22 carries a wheel gear 27, which can be rotated by means of an additional motor, not shown. In this way, both the drum 11 and the spraying assembly 23 rotate around the X axis, the former in a discontinuous manner, or intermittently with angular steps, as in the case of the preceding embodiments, the latter in a continuous manner.

During operation, the drawer-like cages A are introduced, in turn, into the lower part of the drum 11 in the position illustrated in Figure 18, in order to engage respective pairs of supports 16 with their longer sides C, and are subjected to continuous washing in the course of their rotation by 360°, so that their surfaces are repeatedly sprayed, therefore in an extremely effective manner, as in the case of the embodiments described above. As already noted, the two drawer-like cages A, which in turn are located in the lower area of the drum 11 at an angle of 45° also receive, in addition to the washing liquid supplied by the spraying assembly, the drainage water of the two drawer-like cages A arranged in the upper area of the drum 11, so that they are treated with a double volume of washing water. The drawer-like cages A then leave the drum 11 in the position illustrated in Figure 18.

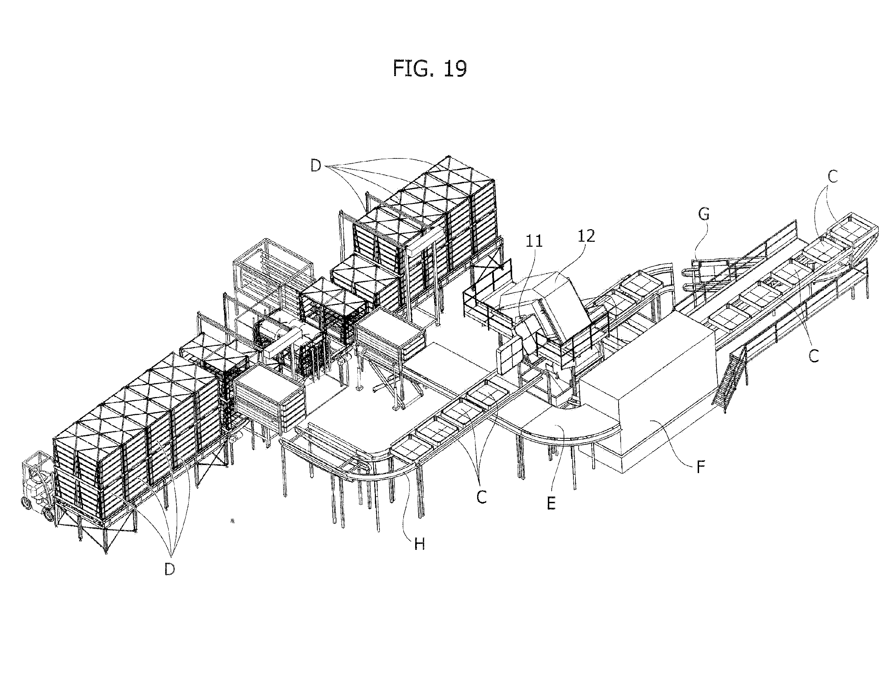

Figure 19 shows an example of a handling system of the drawer-like cages at a slaughterhouse that uses the washing device, which conforms to the third embodiment described above. The drawer-like cages A, containing the poultry coming from the breeding farm by means of transport units D, are transferred from an inlet line E to a gas stunning unit F of the chickens and then emptied, followed by transferal, by means of a line G, to the washing device. The drawer-like cages A are introduced within the rotatable drum 11 contained within the protective casing 12 in a 45°-inclined condition, which has been mentioned, and then extracted from the drum 11 with the same angle, followed by repositioning horizontally and return to the relevant transport unit D by means of an outlet line H.

It is apparent from the above description that the washing device according to the invention ensures complete and effective cleaning of the drawer-like cages, with relatively simple structural and functional solutions, also thanks to the absence of movement or dragging assemblies of the drawer-like cages within the area sprayed with the washing liquid.

Of course, the details of construction and the embodiments may be varied widely with respect to those described and illustrated, without departing from the scope of the present invention as defined by the following claims.

Thus, for example, prior to the inlet 3 of the rotatable drum 1 or 10 or 11 of the washing device, a high-pressure pre-washing assembly (not shown) of the drawer-like cages A may be provided.

## Claims

1. Device for washing containers for transporting live poultry, wherein said containers consist of drawer-like cages (A) having a quadrangular shape with a bottom wall (B), side walls (C) and an open top, **characterized in that** it comprises a drum (1; 10; 11) rotatable around a horizontal axis (X) and having an inlet (3; 14) and an outlet (4) between which supports (5, 6; 16) extend generally parallelly to the axis (X) of the drum (1; 10; 11), which are mutually spaced-apart angularly and configured to be temporarily engaged by the drawer-like cages (A), driving means for intermittently rotating the rotatable drum (1; 10; 11) by angular steps corresponding to the angular spacing between said supports, means for introducing and extracting said drawer-like cages (A) relative to said rotatable drum (1; 10; 11) in synchronism with the intermittent rotation thereof, and spraying means (7; 23) of the drawer-like cages (A) with a washing liquid during the angular motion thereof between the inlet (3; 14) and the outlet (4) of the rotatable drum (1; 10; 11).

2. Device according to claim 1, **characterized in that** said angular motion of the drawer-like cages (A) is at least 360°.

3. Device according to claims 1 or 2, **characterized in that** said supports consist of pairs of guides (5, 6) designed to be slidably engaged by said drawer-like cages (A).

4. Device according to any one of the preceding claims, **characterized in that** said introducing and extracting means operate by push-advancing said drawer-like cages (A) aligned in a horizontal row at the inlet (3) of the drum (1; 10).

5. Device according to any one of the preceding claims, **characterized in that** said spraying means (7) are arranged outside said drum (1; 10).

6. Device according to claim 5, **characterized in that** said spraying means (7; 23) are also arranged inside said drum (10; 11).

7. Device according to claims 3 or 4, **characterized in that** said drum (1) has a length essentially equal to a multiple of the length of a drawer-like cage (A) and is configured to receive therein a row of consecutive drawer-like cages (A) angularly offset from each other, like said pairs of guides (5, 6) and linearly displaceable along said guides (5, 6), alternately to the angular motion thereof, from the inlet (3) to the outlet (4) of the drum (1).

8. Device according to claim 7, **characterized in that** said drum (1) comprises two pairs of guides (5, 6) angularly spaced apart from each other by 90°.

9. Device according to claims 3 or 4, **characterized in that** said drum (10; 11) has a length essentially equal to the length of one drawer-like cage (A) and is configured to receive therein a group of drawer-like cages (A) kept linearly stationary during the angular motion thereof between the inlet (3; 14) and the outlet (4) of the drum (1; 11).

10. Device according to claim 9, **characterized in that** said drum (10) comprises four pairs of longitudinal guides (5, 6) angularly offset from each other by 90°.

11. Device according to claim 9, **characterized in that** said drum (11) is provided with radial end arms (15) mutually connected axially by double supports (16) for engaging opposite side walls (C) of the drawer-like cages (A).

12. Device according to claim 11, **characterized in that** said drum (11) is provided at its ends with two rings (17), one of which is driven in rotation by a motor (20), said rings (17) being rotatably supported externally by respective rolling bearings (21) and rotatably supporting internally two roller assemblies (22) carried by a spraying assembly (23) arranged within the drum (11).

13. Device according to claim 12, **characterized in that** said spraying assembly (23) is formed by a central manifold (24) connected to a number of tubes (25) extending axially within the drum (11) and provided with sprinkling nozzles (26).

14. Device according to claim 12 or 13, **characterized in that** said spraying assembly (23) is continuously driven in rotation.

15. Washing method of transporting containers for live poultry, wherein said containers consist of drawer-like cages (A) having a quadrangular shape with a bottom wall (B), side walls (C) and an open top, **characterized in that** it consists of introducing said drawer-like cages (A) into a rotatable drum (1; 10; 11) at angularly-spaced positions, intermittently driving in rotation said rotatable drum (1; 10; 11) by angular steps corresponding to the angular spacing between said angularly-spaced positions in synchronism with the introduction of said drawer-like cages (A), and spraying said drawer-like cages (A) with a washing liquid during angular motion thereof within the rotatable drum (1; 10; 11) by means of rotary spraying means (7; 23).
